# EUROPEAN PATENT SPECIFICATION

(11) **EP 2 840 296 B1**
(45) Date of publication and mention of the grant of the patent: **03.04.2019**
(21) Application number: 14156976.4
(22) Date of filing: 27.02.2014
(51) Int. Cl.: G02B 6/00, F21V 13/04, F21K 9/61, F21Y 115/10

(54) **Lighting device and movable body lighting device**
Beleuchtungsvorrichtung und bewegliche Körperbeleuchtungsvorrichtung
Dispositif d'éclairage et dispositif d'éclairage avec corps mobile

(30) Priority: 21.08.2013 JP 2013170966
(43) Date of publication of application: 25.02.2015
(73) Proprietor: Toshiba Lighting & Technology Corporation, Yokosuka-shi Kanagawa 237-8510 (JP)
(72) Inventor: Kosugi, Daisuke, Kanagawa, 237-8510 (JP); Hatanaka, Toshihiro, Kanagawa, 237-8510 (JP); Hino, Kiyokazu, Kanagawa, 237-8510 (JP)
(74) Representative: AWA Sweden AB

(56) References cited:
- EP-A2- 1 182 395
- EP-A2- 1 610 054
- US-A1- 2004 208 019
- US-A1- 2006 193 137

## Description

### FIELD

Embodiments described herein relate generally to a lighting device and a movable body lighting device.

### BACKGROUND

There is a lighting device having a light emitting element such as a Light Emitting Diode (LED), a light guide that guides light radiated from the light emitting element, and a dispensing section that is provided in a leading end of the light guide.

US 2006/193137 A1 discloses a LED replacement bulb.

EP 1182395 A2 discloses LED lighting equipment for vehicle.

US 2004/208019 A1 discloses a vehicular lamp.

According to such a lighting device, for example, it is possible to obtain light distribution characteristics similar to those of an incandescent light bulb.

However, in some cases, it is preferable that intensity of light that is radiated in a predetermined direction be enhanced depending on usage of the lighting device or the like.

Further, there is a concern that loss is increased if the light is radiated through the dispensing section.

### BRIEF DESCRIPTION OF THE DRAWINGS

FIG. 1 is a schematic perspective view illustrating a lighting device according to an embodiment.
FIG. 2 is a schematic cross-sectional view illustrating the movable body lighting device according to the embodiment.
FIG. 3 is a schematic perspective view illustrating a light guide and a reflection section.
FIG. 4 is a schematic cross-sectional view illustrating an operation of the light guide and the reflection section.
FIG. 5 is a schematic partial cross-sectional view illustrating another embodiment of an irradiation section and the reflection section.
FIG. 6 is a graph illustrating operations of the light guide having the irradiation section, and the reflection section.
FIG. 7 is a schematic cross-sectional view illustrating an operation of a reflection section according to another embodiment, not covered by the claims.
FIG. 8 is a schematic partial cross-sectional view illustrating another embodiment of a reflection section, not covered by the claims.
FIG. 9 is a graph illustrating operations of the light guide having the irradiation section, and the reflection section.
FIGS. 10A and 10B are schematic views illustrating a case where a shape of a reflector is circular as viewed from a front side. FIG. 10A is a schematic view of the movable body lighting device as viewed from the front side. FIG. 10B is a schematic view illustrating a distribution of a light quantity of light.
FIGS. 11A and 11B are schematic views illustrating a case where the shape of the reflector is elliptical as viewed from the front side. FIG. 11A is a schematic view of the movable body lighting device as viewed from the front side. FIG. 11B is a schematic view illustrating the distribution of the light quantity of the light.
FIGS. 12A and 12B are schematic views illustrating a case where the shape of the reflector is rectangular as viewed from the front side. FIG. 12A is a schematic view of the movable body lighting device as viewed from the front side. FIG. 12B is a schematic view illustrating the distribution of the light quantity of the light.
FIGS. 13A and 13B are schematic views illustrating a case where the shape of the reflector is triangular as viewed from the front side. FIG. 13A is a schematic view of the movable body lighting device as viewed from the front side. FIG. 13B is a schematic view illustrating the distribution of the light quantity of the light.
FIGS. 14A and 14B are schematic views illustrating a case where the shape of the reflector is elliptical as viewed from the front side. FIG. 14A is a schematic view of the movable body lighting device as viewed from the front side. FIG. 14B is a schematic view illustrating the distribution of the light quantity of the light.
FIGS. 15A and 15B are schematic views illustrating a case where the shape of the reflector is rectangular as viewed from the front side. FIG. 15A is a schematic view of the movable body lighting device as viewed from the front side. FIG. 15B is a schematic view illustrating the distribution of the light quantity of the light.
FIGS. 16A and 16B are schematic views illustrating a case where the shape of the reflector is triangular as viewed from the front side. FIG. 16A is a schematic view of the movable body lighting device as viewed from the front side. FIG. 16B is a schematic view illustrating the distribution of the light quantity of the light.

### DETAILED DESCRIPTION

In general, according to one embodiment, a lighting device includes: a light emitting section that has a light emitting element; a light guide that is provided on a side of radiation of light of the light emitting section, the light guide that has a concave section, the concave section that is provided in an end section of the light guide on the side opposite the side of the light emitting section, the concave section that has a truncated cone shape, and a top surface of the truncated cone that is in the light emitting section side; a reflection section includes a through hole that is provided on the bottom surface of the concave section, a first reflection surface that is provided on a side surface of concave section, and a second reflection surface that is provided on the side opposite the first reflection surface; and an irradiation section that protrudes from the through hole to an inside of the concave section.

According to one embodiment, a lighting device includes: a light emitting section that has a light emitting element; a light guide that is provided on a side of radiation of light of the light emitting section; and a reflection section that is provided in an end section of the light guide on the side opposite the side of the light emitting section and includes a through hole that exposes the light guide and a first reflection surface that is inclined in a direction in which a side of the light emitting section approaches a side of a center shaft of the light guide.

According to the lighting device, it is possible to enhance intensity of the light that is radiated in a predetermined direction.

The light guide may further have an irradiation section that protrudes from the through hole.

According to the lighting device having the irradiation section that protrudes from the through hole, the light distribution of the light that is radiated to the front side of the lighting device is easily controlled by changing a shape, size or the like of the irradiation section.

The reflection section may further include a second reflection surface that is inclined in a direction in which a side of the light emitting section approaches a side of a center shaft of the light guide, on the side opposite the first reflection surface.

If the second reflection surface is provided, it is possible to condense the light that is radiated to the front side of the lighting device.

The light guide may exhibit a columnar shape.

A shape of the irradiation section may be any one of hemispherical, semi-spheroidal, cylindrical, prismatic, conical, pyramidal, truncated cone, and truncated pyramid shapes.

The light guide may include a concave section in the end section on the side opposite the side of the light emitting section. Then, the reflection section may be provided on the inside of the concave section.

The side surface of the concave section may be inclined in a direction in which the side of the light emitting section approaches the side of the center shaft of the light guide. Then, the reflection section may be provided on the side surface.

The concave section may have a truncated cone shape.

A flat surface may be provided around the irradiation section.

The flat surface may be provided in the end section of the reflection section on the side opposite the side of the light emitting section.

The reflection section may be provided so as to fill the inside of the concave section.

The irradiation section may protrude from an upper surface of the reflection section.

The lighting device may further include a collar section that is provided near an end section of the light guide on the side of the light emitting section. Then, the collar section may protrude from the outer peripheral surface of the light guide.

The collar section may have a groove section that passes through the collar section in a thickness direction thereof.

The groove section may define a mounting direction of the light guide.

The collar section may have a linear cutout section that is provided near an outer edge of the collar section.

The cutout section may define the mounting direction of the light guide.

The light guide may be formed of a material having translucency. The reflection section may be formed of a material having high reflectivity with respect to the light that is radiated from the light emitting section.

According to another embodiment, a movable body lighting device includes: the lighting device according to any one of the devices described above; and a reflector that holds the lighting device.

According to the movable body lighting device, it is possible to condense the light in a plurality of irradiation positions.

The reflection section that is provided in the lighting device may be held in a focal position of the reflector.

According to the aspect, it is possible to condense the light that is reflected from the reflection section in a predetermined irradiation position.

Hereinafter, embodiments are described with reference to the drawings. Moreover, in each view, the same reference numerals are given to the same configuration elements and detailed description thereof is appropriately omitted.

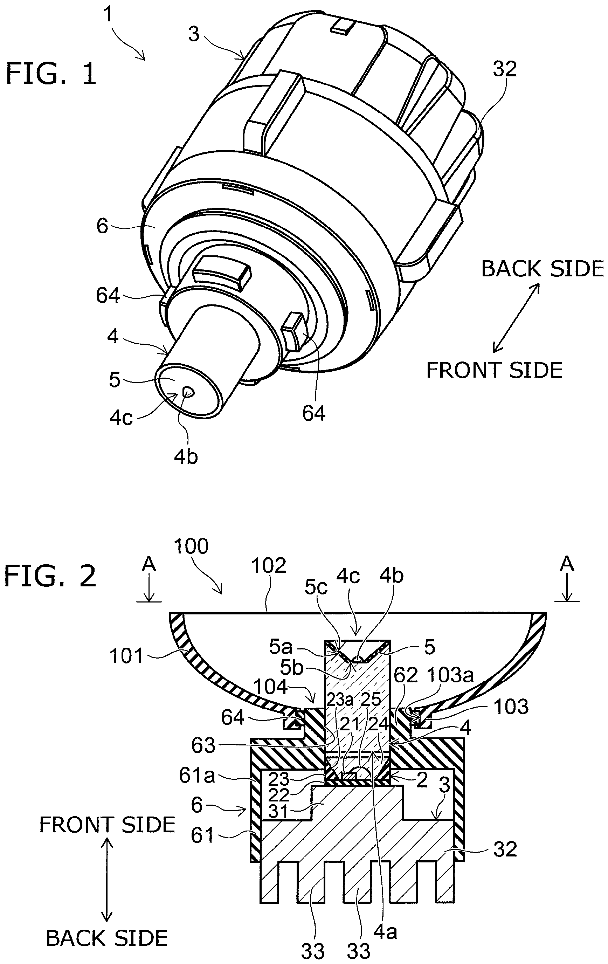

FIG. 1 is a schematic perspective view illustrating a lighting device 1 according to an embodiment. FIG. 2 is a schematic cross-sectional view illustrating a movable body lighting device 100 according to the embodiment.

Moreover, FIG. 2 is a schematic cross-sectional view illustrating the movable body lighting device 100 including the lighting device 1.

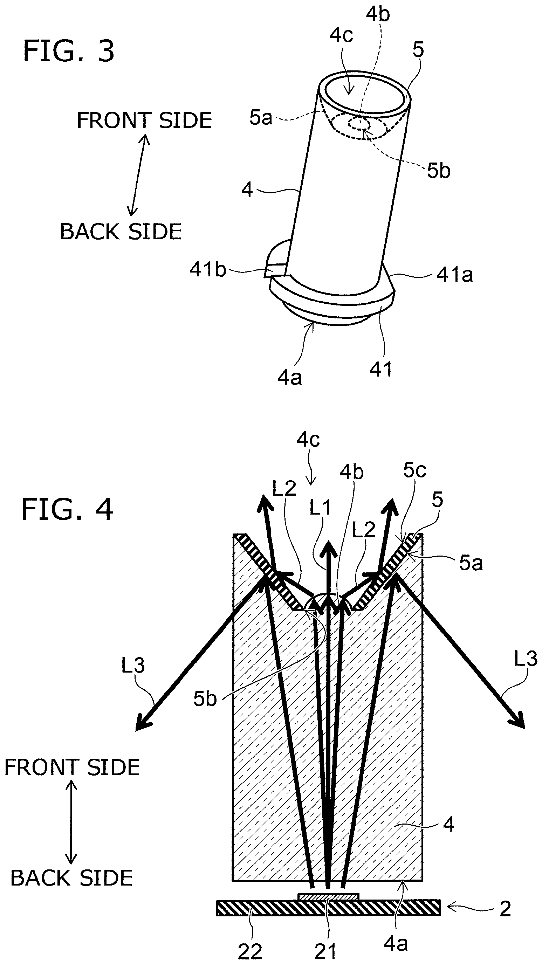

FIG. 3 is a schematic perspective view illustrating a light guide 4 and a reflection section 5.

First, the lighting device 1 according to the embodiment is described.

As illustrated in FIGS. 1 and 2, a light emitting section 2, a heat radiating section 3, the light guide 4, the reflection section 5, and a housing 6 are provided in the lighting device 1.

The light emitting section 2 has a light emitting element 21, a substrate 22, a container 23, and a sealing section 24.

For example, the light emitting element 21 may be a light emitting diode, a laser diode or the like.

The number of light emitting elements 21 is not particularly limited. The number of light emitting elements 21 may be appropriately changed depending on usage of the lighting device 1, an area of an incident surface 4a of the light guide 4 or the like. That is, the number of light emitting elements 21 may be one or more.

If a plurality of light emitting elements 21 are provided, disposition of the plurality of light emitting elements 21 may be a regular disposition such as a matrix shape or a concentric shape, and may be any disposition.

An irradiation surface (an upper surface) of light of the light emitting element 21 faces the incident surface 4a of the light guide 4. Thus, the light radiated from the light emitting element 21 is efficiently introduced into the light guide 4.

The substrate 22 exhibits a planar shape and has a wiring pattern (not illustrated) on a surface thereof. For example, the substrate 22 may be formed of ceramics such as aluminum oxide, aluminum nitride, an organic material such as paper phenol or glass epoxy, may be one which is formed by coating a surface of a metal plate with an insulating material, or the like.

Moreover, if the surface of the metal plate is coated with the insulating material, the insulating material may be formed of the organic material or may be formed of an inorganic material.

If a heat generating quantity of the light emitting element 21 or the like is great, it is preferable that the substrate 22 be formed by using a material having high thermal conductivity from the point of view of heat radiation. As the material having high thermal conductivity, for example, ceramics such as aluminum oxide or aluminum nitride, resin having high thermal conductivity, one which is formed by coating the surface of the metal plate with the insulator or the like may be exemplified.

Moreover, for example, the resin having high thermal conductivity is formed by mixing fibers or particles consisting of carbon or aluminum oxide having high thermal conductivity into the resin having high thermal conductivity such as polyethyleneterephthalate (PET) or nylon.

Further, the substrate 22 may be a single-layer and may be a multi-layer.

A connecting method between the light emitting element 21 and the wiring pattern (not illustrated) provided on the surface of the substrate 22 is not particularly limited. For example, as illustrated in FIG. 2, the light emitting element 21 may be electrically connected to the wiring pattern (not illustrated) through a wire 25. Further, for example, the light emitting element 21 may be mounted by a Chip On Board (COB) that is directly connected to the wiring pattern (not illustrated).

Further, a circuit part such as a resister, a capacitor and diode may be appropriately provided in the substrate 22, if necessary.

One end of a power supply terminal (not illustrated) is connected to the wiring pattern (not illustrated) of the substrate 22. The other end of the power supply terminal (not illustrated) is exposed from a mount section 32 of the heat radiating section 3. An external power supply or the like is connected to the power supply terminal (not illustrated) exposed from the mount section 32 of the heat radiating section 3 through a socket (not illustrated).

The container 23 is provided on the substrate 22 so as to surround the light emitting element 21. For example, the container 23 has an annular shape and the light emitting element 21 is exposed in the center section thereof.

The planar shape of an outer edge of the container 23 is not particularly limited. For example, the planar shape of the outer edge of the container 23 may be circular, elliptical, triangular, rectangular or the like. In this case, the planar shape of the outer edge of the container 23 may be the same as the planar shape of a cross-section of the light guide 4. Further, a planar dimension of the outer edge of the container 23 may be the same as a cross-section dimension of the light guide 4.

For example, the container 23 may be formed of a resin such as polybutylene terephthalate (PBT) or polycarbonate (PC), ceramics or the like.

Further, if the material of the container 23 is the resin, reflectivity with respect to the light emitted from the light emitting element 21 may be improved by mixing particles such as titanium oxide. Moreover, the embodiment is not limited to titanium oxide particles and particles formed of a material having high reflectivity with respect to the light emitted from the light emitting element 21 may be mixed.

A side wall surface 23a of the container 23 on the side of the center section thereof is an inclined surface. A part of the light emitted from the light emitting element 21 is reflected from the side wall surface 23a and is emitted to the front side of the lighting device 1. That is, the container 23 may have a function of a reflector.

The sealing section 24 is provided to cover the inside of the container 23.

The sealing section 24 is formed of a material having translucency. For example, the sealing section 24 may be formed of a silicone resin or the like.

For example, the sealing section 24 may be formed by filling the resin in the center section of the container 23. For example, the filling of the resin may be performed by using a quantitative liquid dispensing device such as a dispenser.

Further, the sealing section 24 may include a phosphor. For example, the phosphor may be an yttrium-aluminum-garnet phosphor (YAG phosphor).

For example, if the light emitting element 21 is a blue light emitting diode and the phosphor is the YAG phosphor, the YAG phosphor is activated by the blue light emitted from the light emitting element 21 and yellow phosphor is emitted from the YAG phosphor. Then, a white light is emitted from the sealing section 24 by mixing the blue light and the yellow light. Moreover, types of phosphors or types of the light emitting elements 21 are not limited to the example, and may be appropriately changed so as to obtain an emitted light of desired color depending on usage of the lighting device 1 or the like.

The heat radiating section 3 has a body section 31, the mount section 32 and fins 33.

The heat radiating section 3 holds the light emitting section 2 that is a heat source. Further, the heat radiating section 3 radiates heat generated in the light emitting section 2.

The body section 31 has a disk shape and the mount section 32 is provided in one main surface. A plurality of fins 33 are provided on the other main surface of the body section 31.

The body section 31 is held inside the housing 6. For example, the body section 31 is bonded to the inside of the housing 6 by using adhesive or the like.

The substrate 22 is provided on a surface opposite the side on which the body section 31 of the mount section 32 is provided.

The fin 33 has a planar shape and protrudes from the main surface of the body section 31. The plurality of fins 33 are provided and function as radiation fins.

Moreover, the body section 31, the mount section 32 and the fins 33 may be integrally formed.

A material of the body section 31, the mount section 32 and the fins 33 is not particularly limited and is preferably formed of a material having high thermal conductivity.

For example, the body section 31, the mount section 32 and the fins 33 may be formed of a metal material such as aluminum or aluminum alloy, a resin having high thermal conductivity described above or the like.

As illustrated in FIG. 3, the light guide 4 has the incident surface 4a, an irradiation section 4b and a concave section 4c.

The light guide 4 propagates the light radiated from the light emitting section 2 and radiates the light to a predetermined direction.

The light guide 4 has a columnar shape and is provided on the side of the radiation of the light of the light emitting section 2. The incident surface 4a is an end surface on the side of the light emitting section 2 of the light guide 4. The light from the light emitting section 2 is incident on the incident surface 4a. A small gap may be provided between the incident surface 4a and the light emitting section 2.

The irradiation section 4b is provided in an end section opposite the incident surface 4a of the light guide 4. The irradiation section 4b radiates a part of light that may propagate through the inside of the light guide 4 to the front side of the lighting device 1.

The irradiation section 4b protrudes from a through hole 5b passing through the reflection section 5. If the irradiation section 4b protruding from the through hole 5b is provided, light distribution of the light that is radiated to the front side of the lighting device 1 is easily controlled by changing the shape, the dimension or the like of the irradiation section 4b.

A shape of a portion of the irradiation section 4b protruding from the through hole 5b may be appropriately changed depending on the usage of the lighting device 1 or the like. The shape of a portion of the irradiation section 4b protruding from the through hole 5b may be hemispherical, semi-spheroidal, cylindrical, prismatic, conical, pyramidal, truncated cone, or truncated pyramid shapes or the like.

The concave section 4c is provided in an end section opposite the incident surface 4a of the light guide 4. The side surface of the concave section 4c is an inclined surface. The side surface of the concave section 4c faces a reflector 101. For example, the concave section 4c has a truncated conical shape. The reflection section 5 is provided inside the concave section 4c.

The light guide 4 is formed of a material having the translucency. For example, the light guide 4 may be formed of acrylic resin, polycarbonate resin, glass or the like.

A collar section 41 is provided near the end section on the side of the incident surface 4a of the light guide 4. The collar section 41 has a planar shape and protrudes from the outer peripheral surface of the light guide 4.

A cutout section 41a and a groove section 41b are provided in the collar section 41.

The cutout section 41a is formed by cutting linearly near the outer edge of the collar section 41.

The groove section 41b is a groove passing through the collar section 41 in a thickness direction thereof.

The cutout section 41a and the groove section 41b define a mounting direction on an axis of the light guide 4.

A convex section (not illustrated) engaging the cutout section 41a and a convex section (not illustrated) engaging the groove section 41b are provided in a hole section 63 of the housing 6.

Thus, when the light guide 4 is inserted and fixed to the hole section 63, the direction (a direction of rotation) of the axis of the light guide 4 is previously determined.

Here, as described below, reflection characteristics of the reflection section 5 are the same as those of the reflector 101. Thus, the mounting direction of the axis of the light guide 4 is defined with respect to the reflector 101.

Thus, the mounting direction of the axis of the light guide 4 is defined by the cutout section 41a and the groove section 41b.

For example, if the shape of the reflector 101 is elliptical as viewed from the front side, the shape of the reflection section 5 is also elliptical as viewed from the front side. Then, when mounting the light guide 4, for example, a long axis direction of the reflector 101 is overlapped in a long axis direction of the reflection section 5.

Moreover, the light guide 4 and the collar section 41 may be integrally molded.

The reflection section 5 reflects a part of the light propagating through the inside of the light guide 4 toward the reflector 101.

The reflection section 5 has a reflection surface 5a (equivalent to an example of a first reflection surface), the through hole 5b and a reflection surface 5c (equivalent to an example of a second reflection surface).

The reflection section 5 is provided inside the concave section 4c. An external appearance of the reflection section 5 has a truncated conical shape.

The reflection surface 5a is provided on the side surface of the concave section 4c. The reflection surface 5a faces the reflector 101. The reflection surface 5a is inclined in a direction in which the side of the light emitting section 2 approaches a side of a center shaft of the light guide 4.

The through hole 5b passes through the reflection section 5. The light guide 4 is exposed in the through hole 5b.

The reflection surface 5c is provided on the side opposite the reflection surface 5a. The reflection surface 5c is inclined in a direction in which the side of the light emitting section 2 approaches the side of the center shaft of the light guide 4.

If the reflection surface 5c is provided, light L2 radiated to the front side of the lighting device 1 can be condensed (see FIG. 4).

The reflection section 5 is formed of a material having high reflectivity with respect to the light radiated from the light emitting section 2. For example, the reflection section 5 may be formed of a white resin, ceramics, a resin in which particles of titanium oxide or the like are mixed, or the like.

The reflection section 5 may be formed by using vapor deposition on the inside of the concave section 4c or may be formed by coating and curing a resin material. Further, the reflection section 5 may be formed by bonding the reflection section 5 that is pre-molded to the inside of the concave section 4c or by integrally molding with the light guide 4 by using a two-color molding method (double molding method).

The housing 6 has a storage section 61 and a holding section 62.

The storage section 61 has a cylindrical shape and one end is closed by a flange section 61a.

An end on the side opposite the side in which the flange section 61a of the storage section 61 is provided is open. The opening of the storage section 61 is closed by connecting the mount section 32 of the heat radiating section 3. The light emitting section 2 is stored inside the storage section 61.

The holding section 62 has a cylindrical shape and protrudes from the flange section 61a.

The hole section 63 for inserting the light guide 4 passes through the holding section 62 and the flange section 61a.

A plurality of convex section 64 protrude on an outside wall section of the holding section 62. When mounting the lighting device 1 on the reflector 101, the plurality of convex sections 64 fit into the inside of a concave section 103a provided in a receiving section 103 of the reflector 101.

The housing 6 has a function for storing the light emitting section 2, a function for holding the heat radiating section 3 and the light guide 4, and a function for radiating heat generated in the light emitting section 2 to the outside of the lighting device 1.

The housing 6 may be formed of a material having high thermal conductivity in consideration of radiating heat to the outside. For example, the housing 6 may be formed of aluminum, aluminum alloy, the resin having high thermal conductivity or the like.

Next, the light guide 4 and the reflection section 5 are described.

FIG. 4 is a schematic cross-sectional view illustrating operations of the light guide 4 and the reflection section 5.

Moreover, in FIG. 4, in order to avoid complication, only a part of the light propagating through the inside of the light guide 4 is drawn. For example, the light or the like that propagates while being totally reflected inside the light guide 4 is omitted.

As illustrated in FIG. 4, the light radiated from the light emitting element 21 of the light emitting section 2 enters the inside of the light guide 4 from the incident surface 4a of the light guide 4. The light that enters the inside of the light guide 4 propagates through the inside of the light guide 4 and reaches an end section on the side of the concave section 4c of the light guide 4.

At this time, the light that enters the irradiation section 4b is radiated toward the front side of the lighting device 1.

For example, light L1 that enters the irradiation section 4b from an axial direction of the light guide 4 is radiated in the axial direction of the light guide 4 without change. Further, the light L2 that enters the irradiation section 4b from a direction intersecting the axial direction of the light guide 4 enters the reflection surface 5c of the reflection section 5 and is reflected from the reflection surface 5c, and is radiated toward the front side of the lighting device 1.

Further, light L3 that enters the reflection surface 5a of the reflection section 5 is reflected from the reflection surface 5a and is radiated to a back side of the lighting device 1. For example, the light L3 that is reflected from the reflection surface 5a is radiated to the reflector 101. The light L3 that enters the reflector 101 is reflected from the reflector 101 and is radiated to the front side of the lighting device 1.

At this time, an irradiation position in which the light L3 is condensed by the operation of the reflector 101 is different from irradiation positions in which the light L1 and the light L2 are condensed.

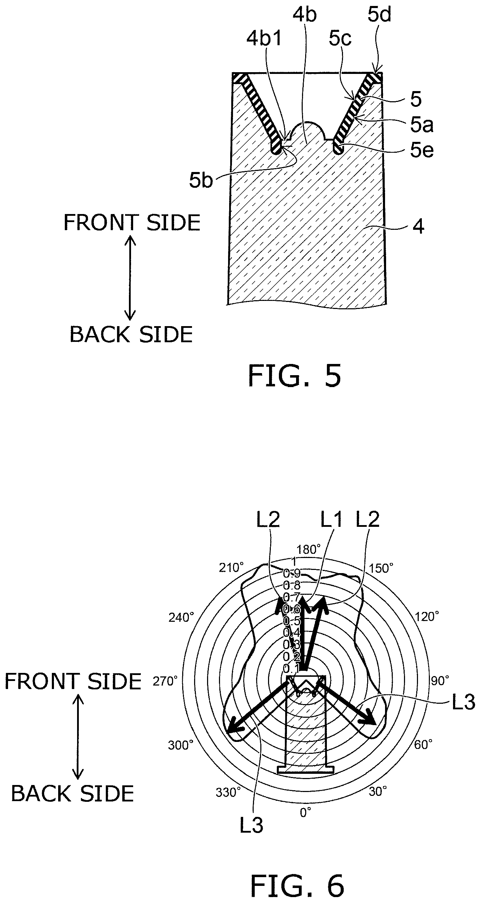

FIG. 5 is a schematic partial cross-sectional view illustrating another embodiment of the irradiation section 4b and the reflection section 5.

As illustrated in FIG. 5, a flat surface 4b1 may be further provided around a portion of the irradiation section 4b protruding from the through hole 5b.

Further, a flat surface 5d may be further provided on the side of the outer periphery of the reflection section 5.

Further, a convex section 5e may be further provided on the side of the inner periphery of the reflection section 5.

If at least one of the flat surface 4b1, the flat surface 5d and the convex section 5e is provided, the light guide 4 and the reflection section 5 are easily and integrally molded by using the two-color molding method (the double molding method).

FIG. 6 is a graph illustrating operations of the light guide 4 having the irradiation section 4b, and the reflection section 5.

FIG. 6 illustrates light distribution characteristics by the light guide 4 having the irradiation section 4b, and the reflection section 5 illustrated in FIG. 5.

Further, FIG. 6 illustrates actual measurement data.

As can be seen from FIG. 6, according to the lighting device 1 of the embodiment, intensity of the light radiated in a predetermined direction can be increased.

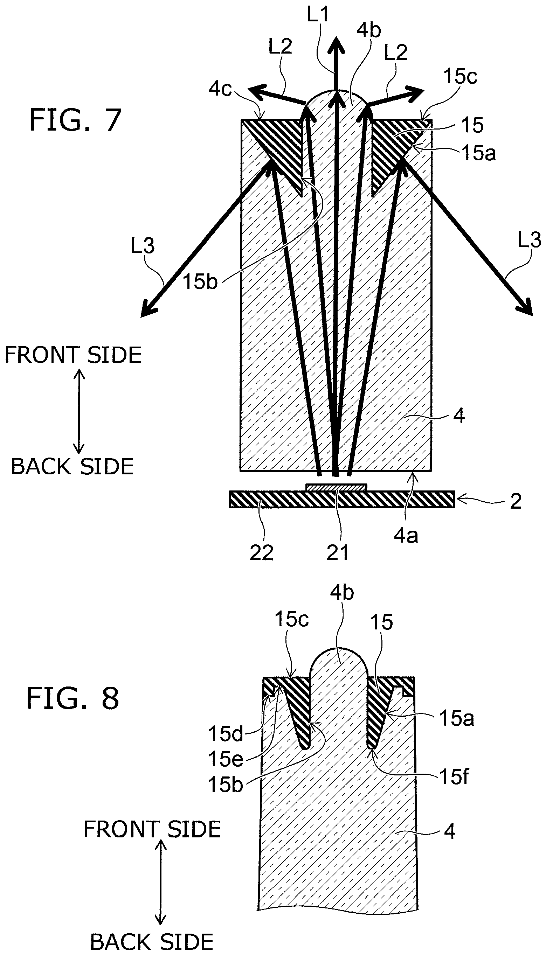

FIG. 7 is a schematic cross-sectional view illustrating an operation of a reflection section 15 according to another embodiment.

Moreover, in FIG. 7, in order to avoid complication, only a part of the light propagating through the inside of the light guide 4 is drawn. For example, the light or the like that propagates while being totally reflected inside the light guide 4 is omitted.

As illustrated in FIG. 7, the reflection section 15 is provided so as to fill the inside of the concave section 4c.

The reflection section 15 has a reflection surface 15a facing the reflector 101. The reflection surface 15a is provided on the side surface of the concave section 4c.

The reflection section 15 has a through hole 15b. The irradiation section 4b is provided inside the through hole 15b.

The irradiation section 4b protrudes from the through hole 15b. In this case, the irradiation section 4b protrudes from an upper surface 15c of the reflection section 15.

A material of the reflection section 15 may be the same as that of the reflection section 5.

As illustrated in FIG. 7, the light radiated from the light emitting element 21 of the light emitting section 2 enters the inside of the light guide 4 from the incident surface 4a of the light guide 4. The light that enters the inside of the light guide 4 propagates through the inside of the light guide 4 and reaches the end section on the side of the concave section 4c of the light guide 4.

At this time, the light that enters the irradiation section 4b is radiated to the front side of the lighting device 1.

For example, the light L1 that enters the irradiation section 4b from the axial direction of the light guide 4 is radiated to the axial direction of the light guide 4 without change. Further, the light L2 that enters the irradiation section 4b from a direction intersecting the axial direction of the light guide 4 is radiated to the direction intersecting the axial direction of the light guide 4. The light L2 that is radiated in the direction intersecting the axial direction of the light guide 4 is reflected from the reflector 101 and is radiated to the front side of the lighting device 1.

Further, the light L3 that enters the reflection surface 15a of the reflection section 15 is reflected from the reflection surface 15a and is radiated to the back side of the lighting device 1. That is, the light L3 that is reflected from the reflection surface 15a is radiated to the reflector 101. The light L3 that enters the reflector 101 is reflected from the reflector 101 and is radiated to the front side of the lighting device 1.

At this time, the irradiation position in which the light L3 is condensed by the operation of the reflector 101 is different from irradiation positions in which the light L1 and the light L2 are condensed.

FIG. 8 is a schematic partial cross-sectional view illustrating another embodiment of the reflection section 15. As illustrated in FIG. 8, a flat surface 15d may be provided on the side of the outer periphery of the reflection section 15 and a concave section 15e may be provided in the flat surface 15d.

Further, a curved surface 15f may be provided on the side of the inner periphery of the reflection section 15.

If at least one of the flat surface 15d, the concave section 15e and the curved surface 15f is provided, the light guide 4 and the reflection section 15 are easily and integrally molded by using the two-color molding method (the double molding method).

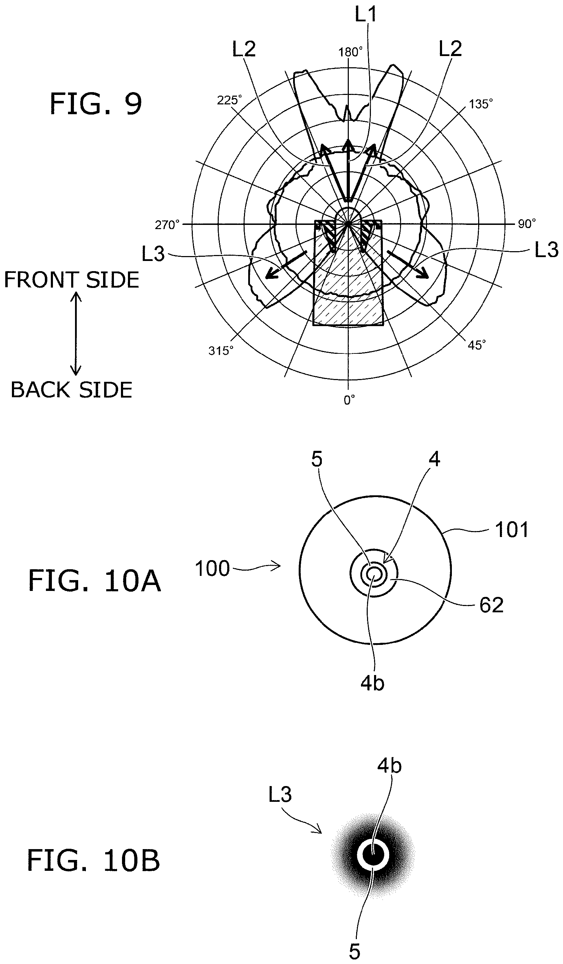

FIG. 9 is a graph illustrating operations of the light guide 4 having the irradiation section 4b, and the reflection section 15.

FIG. 9 illustrates light distribution characteristics by the light guide 4 having the irradiation section 4b, and the reflection section 15 illustrated in FIG. 8.

Moreover, FIG. 9 illustrates data which are obtained by performing simulations.

As can be seen from FIG. 9, according to the lighting device 1 of the embodiment, intensity of the light radiated in a predetermined direction can be increased.

Next, the movable body lighting device 100 according to the embodiment is exemplified.

A movable body in which the movable body lighting device 100 is provided is, for example, a vehicle, a train, a ship, an aircraft or the like.

For example, the movable body lighting device 100 may be used in an exterior or an interior of the vehicle. For example, the movable body lighting device 100 may be a stop light, a tail lamp, a turn signal lamp, a fog lamp or the like configuring a front combination light, a rear combination light or the like.

As illustrated in FIG. 2, the lighting device 1, the reflector 101, a lens 102 and the receiving section 103 according to the embodiment are provided in the movable body lighting device 100.

The reflector 101 holds the lighting device 1 through the receiving section 103.

The reflector 101 has a concavity.

For example, the reflector 101 may be formed by using a resin material. Further, a reflecting layer formed of aluminum or the like may be provided on the inner peripheral surface of the reflector 101.

The lens 102 is provided so as to close the opening on the front side of the reflector 101. The lens 102 may be a clear lens that is formed of a material having translucency such as glass.

The receiving section 103 is provided on the back side of the reflector 101. The concave section 103a for fitting the convex section 64 of the housing 6 is provided in the receiving section 103. A hole 104 for inserting the holding section 62 is provided in the receiving section 103. Further, a seal member (not illustrated) formed of a material such as rubber or silicone resin may be provided between the receiving section 103 and the flange section 61a of the storage section 61.

When the lighting device 1 is held in the reflector 101, the irradiation section 4b and the reflection section 5 which are provided in the end section of the light guide 4 are held inside the reflector 101.

As described above, according to the lighting device 1, the intensity of the light radiated in a predetermined direction can be increased.

Thus, according to the movable body lighting device 100 of the embodiment, the light may be condensed in a plurality of irradiation positions.

For example, if the reflection section 5 is held in a focal position of the reflector 101, the light L3 that is reflected from the reflection section 5 may be condensed in a predetermined irradiation position.

Then, for example, the light distribution and the intensity of emitted light may be obtained by the light L1 and the light L2, based on laws of vehicles, and a rendering property may be improved by the light L3.

Here, there are various shapes in the reflector 101 as viewed from the front side, depending on usage of the movable body lighting device 100 or the like. In this case, if the light quantity of the light L3 from the reflection section 5 is constant in all directions, irradiation unevenness may occur in the irradiation position.

Thus, the reflection characteristics of the reflection section 5 are set to be similar to the reflection characteristics of the reflector 101.

FIGS. 10A and 10B are schematic views illustrating a case where the shape of the reflector 101 is circular as viewed from the front side.

FIG. 10A is a schematic view of the movable body lighting device 100 as viewed from the front side. FIG. 10B is a schematic view illustrating the distribution of the light quantity of the light L3.

Moreover, this is a case where a shape of a cross-section of the light guide 4 is circular (the cylindrical light guide 4) as viewed from the front side.

As illustrated in FIG. 10A, when the shape of the reflector 101 is circular as viewed from the front side, change in the angle of the inner peripheral surface of the reflector 101 is constant in a circumferential direction.

That is, the reflection characteristics of the reflector 101 are constant in the circumferential direction.

Thus, as illustrated in FIG. 10B, the external shape of the reflection section 5 is circular as viewed from the front side and then the reflection characteristics of the reflection section 5 are constant in the circumferential direction.

That is, the light quantity of the light L3 is uniform in the irradiation position by making the reflection section 5 have the reflection characteristics similar to the reflection characteristics of the reflector 101. In this manner, it is possible to suppress the irradiation unevenness.

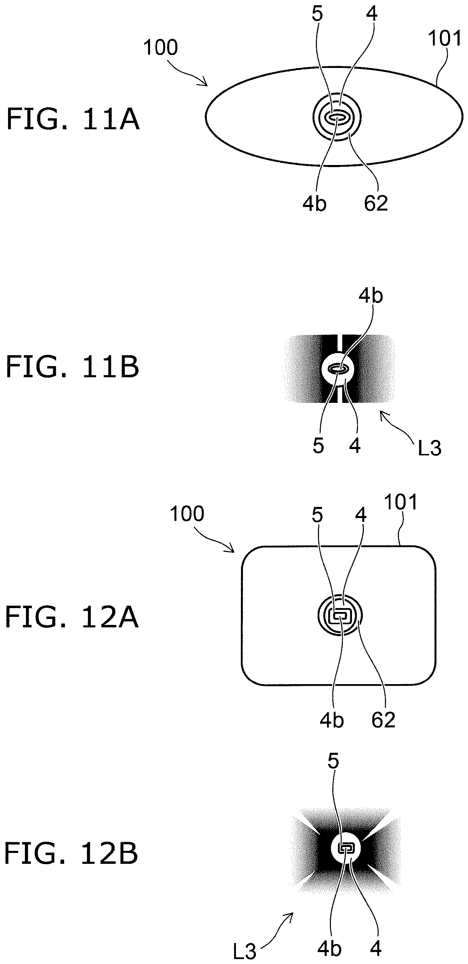

FIGS. 11A and 11B are schematic views illustrating a case where the shape of the reflector 101 is elliptical as viewed from the front side.

FIG. 11A is a schematic view of the movable body lighting device 100 as viewed from the front side. FIG. 11B is a schematic view illustrating the distribution of the light quantity of the light L3.

Moreover, this is a case where the shape of the cross-section of the light guide 4 is circular (the cylindrical light guide 4) as viewed from the front side.

As illustrated in FIG. 11A, when the shape of the reflector 101 is elliptical as viewed from the front side, change in the angle of the inner peripheral surface in the long axis direction is smaller than that of the angle of the inner peripheral surface in a short axis direction. If the change in the angle of the inner peripheral surface is small, the light L3 that is reflected is directed in a similar direction. Thus, in the irradiation position, the light quantity of the light L3 that is reflected from the inner peripheral surface in the long axis direction is great and there is a concern that the irradiation unevenness occurs.

Thus, as illustrated in FIG. 11B, the external shape of the reflection section 5 is elliptical as viewed from the front side and then the light quantity of the light L3 that is radiated to the inner peripheral surface in the long axis direction is small.

That is, the light quantity of the light L3 is uniform in the irradiation position by making the reflection section 5 have the reflection characteristics similar to the reflection characteristics of the reflector 101. In this manner, it is possible to suppress the irradiation unevenness.

FIGS. 12A and 12B are schematic views illustrating a case where the shape of the reflector 101 is rectangular as viewed from the front side.

FIG. 12A is a schematic view of the movable body lighting device 100 as viewed from the front side. FIG. 12B is a schematic view illustrating the distribution of the light quantity of the light L3.

Moreover, this is a case where the shape of the cross-section of the light guide 4 is circular (the cylindrical light guide 4) as viewed from the front side.

As illustrated in FIG. 12A, when the shape of the reflector 101 is rectangular as viewed from the front side, the change in the angle of the inner peripheral surface in a short side is smaller than that of the angle of the inner peripheral surface in a long side. If the change in the angle of the inner peripheral surface is small, the light L3 that is reflected is directed in a similar direction. Thus, in the irradiation position, the light quantity of the light L3 that is reflected from the inner peripheral surface the short side is great and there is a concern that the irradiation unevenness occurs.

Thus, as illustrated in FIG. 12B, the external shape of the reflection section 5 is rectangular as viewed from the front side and then the light quantity of the light L3 that is radiated to the inner peripheral surface in the short side is small.

That is, the light quantity of the light L3 is uniform in the irradiation position by making the reflection section 5 have the reflection characteristics similar to the reflection characteristics of the reflector 101. In this manner, it is possible to suppress the irradiation unevenness.

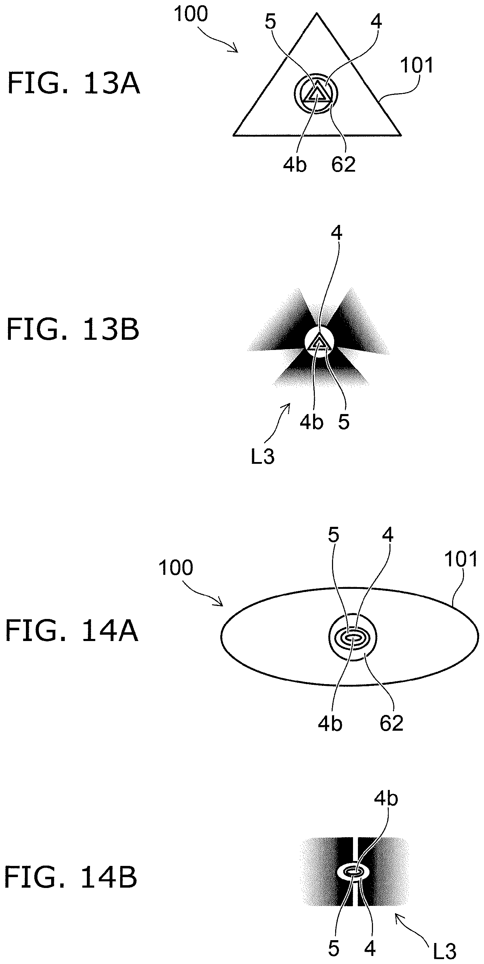

FIGS. 13A and 13B are schematic views illustrating a case where the shape of the reflector 101 is triangular as viewed from the front side.

FIG. 13A is a schematic view of the movable body lighting device 100 as viewed from the front side. FIG. 13B is a schematic view illustrating the distribution of the light quantity of the light L3.

Moreover, this is a case where the shape of the cross-section of the light guide 4 is circular (the cylindrical light guide 4) as viewed from the front side.

As illustrated in FIG. 13A, when the shape of the reflector 101 is triangular as viewed from the front side, the change in the angle of the inner peripheral surface in a side is smaller than that of the angle of the inner peripheral surface in a corner side. If the change in the angle of the inner peripheral surface is small, the light L3 that is reflected is directed in a similar direction. Thus, in the irradiation position, the light quantity of the light L3 that is reflected from the inner peripheral surface in the corner side is great and there is a concern that the irradiation unevenness occurs.

Thus, as illustrated in FIG. 13B, the external shape of the reflection section 5 is triangular as viewed from the front side and then the light quantity of the light L3 that is radiated to the inner peripheral surface in the corner side is small.

That is, the light quantity of the light L3 is uniform in the irradiation position by making the reflection section 5 have the reflection characteristics similar to the reflection characteristics of the reflector 101. In this manner, it is possible to suppress the irradiation unevenness.

FIGS. 14A and 14B are schematic views illustrating a case where the shape of the reflector 101 is elliptical as viewed from the front side.

FIG. 14A is a schematic view of the movable body lighting device 100 as viewed from the front side. FIG. 14B is a schematic view illustrating the distribution of the light quantity of the light L3.

Moreover, this is a case where the shape of the cross-section of the light guide 4 is elliptical (the elliptic cylindrical light guide 4) as viewed from the front side.

Similar to the example in FIGS. 11A and 11B, also in the embodiment, the reflection section 5 has the reflection characteristics similar to the reflection characteristics of the reflector 101.

Further, in the embodiment, the cross-section of the light guide 4 is elliptical as viewed from the front side.

Thus, since an area of the reflection section 5 may be great, it is possible to increase the light quantity of the light L3.

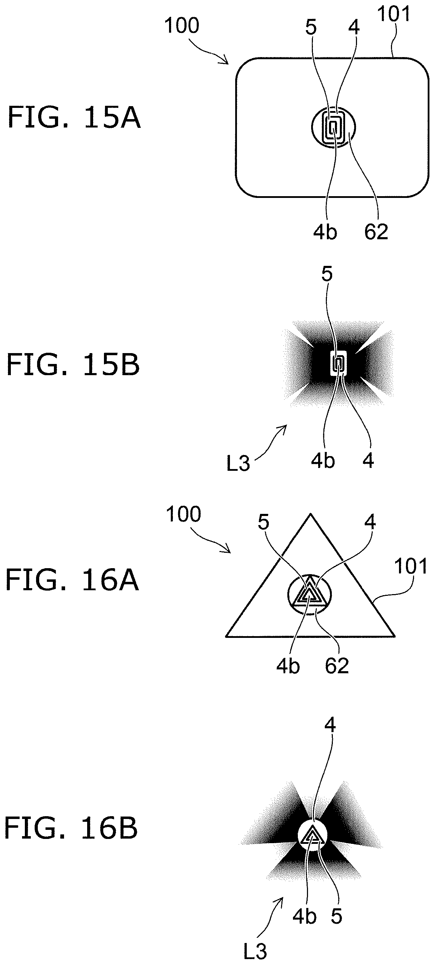

FIGS. 15A and 15B are schematic views illustrating a case where the shape of the reflector 101 is rectangular as viewed from the front side.

FIG. 15A is a schematic view of the movable body lighting device 100 as viewed from the front side. FIG. 15B is a schematic view illustrating the distribution of the light quantity of the light L3.

Moreover, this is a case where the shape of the cross-section of the light guide 4 is rectangular (the square prismatic light guide 4) as viewed from the front side.

Similar to the example in FIGS. 12A and 12B, also in the embodiment, the reflection section 5 has the reflection characteristics similar to the reflection characteristics of the reflector 101.

Further, in the embodiment, the cross-section of the light guide 4 is rectangular as viewed from the front side.

Thus, since the area of the reflection section 5 may be great, it is possible to increase the light quantity of the light L3.

FIGS. 16A and 16B are schematic views illustrating a case where the shape of the reflector 101 is triangular as viewed from the front side.

FIG. 16A is a schematic view of the movable body lighting device 100 as viewed from the front side. FIG. 16B is a schematic view illustrating the distribution of the light quantity of the light L3.

Moreover, this is a case where the shape of the cross-section of the light guide 4 is triangular (the triangular prismatic light guide 4) as viewed from the front side.

Similar to the example in FIGS. 13A and 13B, also in the embodiment, the reflection section 5 has the reflection characteristics similar to the reflection characteristics of the reflector 101.

Further, in the embodiment, the cross-section of the light guide 4 is triangular as viewed from the front side.

Thus, since the area of the reflection section 5 may be great, it is possible to increase the light quantity of the light L3.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention, as defined by the claims. The accompanying claims are intended to cover such forms or modifications as would fall within the scope of the invention. Moreover, above-mentioned embodiments can be combined mutually and can be carried out.

## Claims

1. A lighting device (1) comprising:
a light emitting section (2) that has a light emitting element (21),
a light guide (4) that is provided on a side of radiation of light of the light emitting section (2), the light guide (4) that has a concave section (4c), the concave section (4c) that is provided in an end section of the light guide (4) on the side opposite the side of the light emitting section (2), the concave section (4c) that has a truncated cone shape, and a top surface of the truncated cone that is in the light emitting section (2) side;
**characterized by** further comprising a reflection section (5) that includes a through hole (5b) that is provided on the bottom surface of the concave section (4c), a first reflection surface (5a) that is provided on a side surface of concave section (4c), and a second reflection surface (5c) that is provided on the side opposite the first reflection surface (5a); and
the light guide further comprising an irradiation section (4b) that protrudes from the through hole (5b) to an inside of the concave section (4c).

2. A movable body lighting device (100) comprising:
the lighting device (1) according to claim 1; and
a reflector (101) that holds the lighting device (1).

3. The device (100) according to claim 2,
wherein the reflection section (5) that is provided in the lighting device (1) is held in a focal position of the reflector (101).

## Patentansprüche

1. Beleuchtungsvorrichtung (1) umfassend:
einen lichtemittierenden Abschnitt (2), der ein lichtemittierendes Element (21) aufweist,
einen Lichtleiter (4), der auf einer Lichtstrahlungsseite des lichtemittierenden Abschnitts (2) bereitgestellt ist, wobei der Lichtleiter (4) einen konkaven Abschnitt (4c) aufweist, der konkave Abschnitt (4c) in einem Endabschnitt des Lichtleiters (4) auf der Seite gegenüber der Seite des lichtemittierenden Abschnitts (2) bereitgestellt ist, der konkave Abschnitt (4c) eine kegelstumpfförmige Form aufweist und eine obere Fläche des Kegelstumpfes auf der Seite des lichtemittierenden Abschnitts (2) liegt;
**dadurch gekennzeichnet, dass** sie ferner Folgendes umfasst:
einen Reflexionsabschnitt (5), der eine Durchgangsbohrung (5b), die auf der unteren Fläche des konkaven Abschnitts (4c) bereitgestellt ist, eine erste Reflexionsfläche (5a), die auf einer Seitenfläche des konkaven Abschnitts (4c) bereitgestellt ist, und eine zweite Reflexionsfläche (5c), die auf der Seite gegenüber der ersten Reflexionsfläche (5a) bereitgestellt ist, beinhaltet; und
wobei der Lichtleiter einen Strahlungsabschnitt (4b) umfasst, der von der Durchgangsbohrung (5b) zu einer Innenseite des konkaven Abschnitts (4c) vorsteht.

2. Beleuchtungsvorrichtung (100) für einen beweglichen Körper umfassend:
die Beleuchtungsvorrichtung (1) nach Anspruch 1; und
einen Reflektor (101), der die Beleuchtungsvorrichtung (1) hält.

3. Vorrichtung (100) nach Anspruch 2,
wobei der Reflexionsabschnitt (5), der in der Beleuchtungsvorrichtung (1) bereitgestellt ist, in einer Fokusposition des Reflektors (101) gehalten wird.

## Revendications

1. Dispositif d'éclairage (1) comprenant :
une section émettrice de lumière (2) qui a un élément émetteur de lumière (21),
un guide de lumière (4) qui est prévu sur un côté de rayonnement de lumière de la section émettrice de lumière (2), le guide de lumière (4) qui a une section concave (4c), la section concave (4c) qui est prévue dans une section d'extrémité du guide de lumière (4) sur le côté opposé au côté de la section émettrice de lumière (2), la section concave (4c) qui a une forme de cône tronqué, et une surface de sommet du cône tronqué qui est dans le côté de la section émettrice de lumière (2) ;
**caractérisé en ce qu'**il comprend en outre une section de réflexion (5) qui inclut un alésage traversant (5b) qui est prévue sur la surface de base de la section concave (4c), une première surface de réflexion (5a) qui est prévue sur une surface latérale de la section concave (4c) et une seconde surface de réflexion (5c) qui est prévue sur le côté opposé à la première surface de réflexion (5a) ; et
le guide de lumière comprenant en outre une section d'irradiation (4b) qui dépasse en saillie de l'alésage traversant (5b) vers un intérieur de la section concave (4c).

2. Dispositif d'éclairage à corps mobile (100) comprenant :
le dispositif d'éclairage (1) selon la revendication 1; et
un réflecteur (101) qui retient le dispositif d'éclairage (1) ;

3. Dispositif (100) selon la revendication 2,
dans lequel la section de réflexion (5) qui est prévue dans le dispositif d'éclairage (1) est retenue dans une position focale du réflecteur (101).
